# EUROPEAN PATENT SPECIFICATION

(11) **EP 0 518 059 B1**
(45) Date of publication and mention of the grant of the patent: **16.02.2000**
(21) Application number: 92107895.2
(22) Date of filing: 09.05.1992
(51) Int. Cl.: G02B 6/12

(54) **Manufacturing of LiNbO3 channel optical guides**
Herstellung von optischen LiNbO3-Kanalwellenleitern
Fabrication de guides d'onde optiques en forme de sillon en LiNbO3

(30) Priority: 10.05.1991 IT RM910316
(43) Date of publication of application: 16.12.1992
(73) Proprietor: Alenia Marconi Systems S.p.A., 00131 Roma (IT)
(72) Inventor: Vannucci, Antonello, I - 00198 Roma (IT); Varasi, Mauro, I - 00177 Roma (IT)
(74) Representative: Gustorf, Gerhard, Dipl.-Ing.

(56) References cited:
- EP-A- 0 340 983
- EP-A- 0 425 076
- JP-A- 1 065 841
- IEEE PHOTONICS TECHNOLOGY LETTERS vol. 2, no. 3, March 1990, NEW YORK US pages 184 - 186; Y.-S. SON ET AL.: 'Control of mode profiles in proton-diffused LiNbO3 waveguides using self-aligned SiO2 cladding'
- PATENT ABSTRACTS OF JAPAN vol. 11, no. 12 (P-535)(2459) 13 January 1987
- Applied Physics Letters, Vol.41,No7,P.607-608,01.10.82,J.L.Jackel etal.: "Proton exchange for high-index waveguides in LiNbO3"

## Description

This invention regards a new manufacturing process of Lithium Niobate channel optical guides, obtained in particular on its 'X' cut surface, where a thin dielectric film, within which the channel is defined by photo etching_{,} is used as a template while manufacturing the optical guide and as an insulating film between this guide and the metal electrodes, resulting in a self-aligning process. A similar method, corresponding to the preamble of claim 1, is known from EP-A-340 983. This process pertains to the field of planar integrated optical componenent technologies and it can be advantageously applied to the manufacturing of components used for optical fibre sensors (Reference #1:W.C.Gross et al, Applied Optics, Vol 19,#6, page 852-858, 1980) and for wide band microwave signal processing (Reference #3:T.Sueta and M.Izutsu, IEEE Trans.on Microwave Theory and Techniques, Vol.38,#5, page 477-482, May 1990). It is a known fact that previously the manufacturing of channel optical guides when in particular meant for phase modulators based upon Lithium Niobate electro-optical effects, suffered of the following drawbacks:
- complexity of the manufacturing process
- constance of the electro-optical characteristics of structure due to the presence of the insulating layer above the optical guide and the material within which the optical guide is manufactured (Reference #4:R.A.Becker, Appl.Phys.Lett. vol.43, pag.131-133, 1983)
- elimination of the time-dependent instabilities of the optical and electro-optical characteristics of the device (Reference #5:J.L.Jackel and C.E.Rice, "Proceedings of Giuded Wave Optoelectronic Material", SPIE vol 460, pag.43-48, 1984).

The manufacturing of LiNbO3 channel optical guides more often adopted at present consists of the diffusion of Titanium into the Lithium Niobate crystal (Ref #6: W.K.Burns et al, J.Appl.Phis.,vol.50,#10, pag.6175-6182,October 1979) and of the following deposition of a dielectric film followed by the deposition and definition of the metal electrodes. This process is costly in terms of deposition and definition of the Titanium film (complex high accuracy equipment required to determine the thickness of the film) and of the following thermal diffusion of Titanium into the crystal (temperature control at about 1000 deg C). The proton exchange in acid solution between Li (Li⁺) of the crystal and the solution protons (H+) has shown the possibility to cut the complexity of the manufacuting process by a very large amount (Ref.#7:K.K.Wong,Spie Vol.993 "Integrated Optical Circuit Eng.VI". pag.13-25,1988),but affected negatively by a reduced electro-optical efficiency of the devices. Eventually, the presence of the dielectric film above the optical guide, independently from its manufacturing process, gives way to an instability of the modulator electro-optical characteristics. To eliminate this effect, the dielectric film must be removed above the optical guide (Ref #8: Yamada et al, Japan J.Appl.Phys. vol.20,#4, pag.733-737, April 1981).

The process dealt with by this patent application offers the following advantages:
- simplification of the manufacturing process
- no modification of the electro-optical efficiency
- elimination of the electro-optical instability characteristics.

This is made possible by the adoption of a template in the proton exchange process, which consists of a dielectric film which is deposited onto the surface and which carries the optical guide channel and also by the thermal tratment which follows the exchance phase. The use of a dielectric film covers with one action both the function of proton exchange template and the provision of an insulating layer between the optical guide and the metal electrodes which are later implemented. At the same time, the resulting isolation layer is not present above the optical guide, so as to eliminate the causes of instability of the electro-optical characteristics of the modulator.

The invention will now be descrtibed for illustrative and non limiting purposes with reference to the drawings attached.

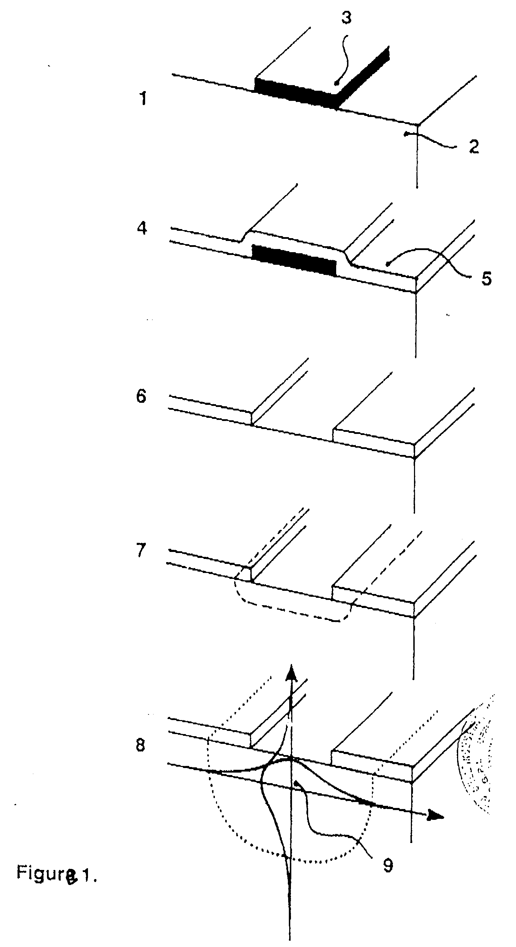

Figure 1 shows a schematic outline of the manufacturing process phases where we can see:
1 result of the photo etched definition of a polymer which corresponds to the channel to be formed in the template for the proton exchange;
2 LiNbO3 substrate, "x" cut;
3 photo-etched PMMA definition;
4 result of the deposition of the dielectric thin film;
5 SiO2 layer;
6 result of the openeing of the channel in the dielectric film by lifting the polymer;
7 result of the proton exchange;
8 result of the thermal treatment;
9 schematic diagram of the refractive index profile.

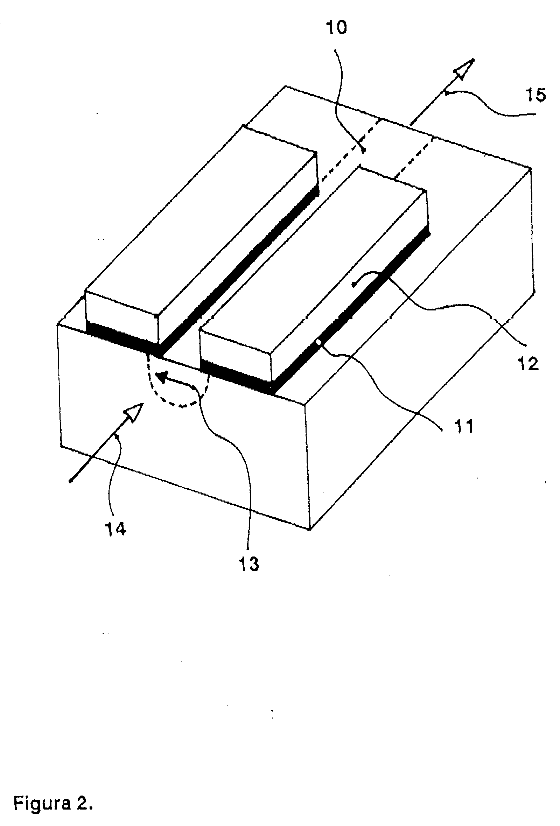

Figure 2 is a diagram of the structure of the modulator where we can see:
10 optical guide;
11 insulating layer;
12 metal electrodes;
13 electric field;
14 optical radiation input;
15 phase modulated optical radiation output.

Once more for non limiting descriptive purposes we shall now illustrate the sequence of phases of the manufacturing process of the optical guide and of the insulating layer along the lines of Figure 1:
a)photo-etch definition of a PMMA structure (Poly Methil Meta Acrylate) 500 nm thick corrisponding to the channel left free by the dielectric layer and through which the exchange will be later effected (figure 1.1)
b) deposition by magnetron sputtering in oxidising ambient (RF power density at the cathode of 3 W/cm2, partial pressure of Argon =2x10-3 Torr, partial pressure Oxigene 1x10-3 Torr) of a Silicon dioxide (SiO2) film 200nm thick (figure 1.2)
c) removal of the SiO2 layer from the channel by polymer lift-up by immersion in a solvent (Acetone) (figure 1.3)
d)Proton exchange in 1% Benzoic Acid with Lithium Benzoate (temperature of the solution +235 deg C, duration of the exchange 35 minutes) throught he template formed by the Silicon dioxide layer (Figure 1.4)
e) Thermal treatment for interdiffusion of the protons present in the layer exchanged and the Lithium atoms present in the crystal regions close to the same layer (temperatore 350 deg C in Oxigene, duration 50 minutes) (figure 1.5).

At the end of the process, outlined above, an increase of the refractive index in the interdiffused Li-H area is obtained, qhich makes possible the restriction of the laser optical radiation to 830 nm, resulting in a single mode optical guide for TE polarisation. At the same time, the optical guide is self aligned with a channel defined in a dielectric layer which is used as an isolation layer between it and the elctrodes of a generic modulator which is shown as an elementary structure in Figure 2.

The elementary modulator presently preferred by the inventors has the following characteristics:
- in-guide optical propagation loss +1 dB/cm
- coupling loss with a polarisation conservation fibre =0.4 dB
- voltage required to introduce a phase delay of the optical radiation equal to 0.5 wavelengths =1.4 Volt

The main advantages of the process described are the following:
- The optical guide and the isolating film between the guide and the metal electrodes are obtained in a self-aligning method by using a layer of Silicon Dioxide as a template for the proton exchange process;
- the presence of the insulating dielectric layer above the guide is eliminated, solving the problem of time instability of the electro-optical structure, known as DC drift, caused by the presence of the insulating layer even above the guide;
- the electro-optical efficiency characteristics of the LiNbO3 crystal are not affected by the process.

## Claims

1. Method of making an electro-optical device having at least one single mode optical waveguide comprising the steps of:
a) providing an optical substrate of LiNbO₃;
b) masking the surface of said substrate with a Si0₂ film so as to define an uncovered waveguide structure;
c) effecting proton exchange along the uncovered structure of the surface in order to modify the optical properties of said substrate along said uncovered structure;
d) thermally treating said substrate in an oxygen atmosphere to effect interdiffusion of protons in an exchange layer along said uncovered structure, thereby forming in said substrate a single mode optical waveguide;
characterised in that
- said optical substrate is an X-cut crystal;
- the mask for defining the waveguide structure is performed according to the following steps:
aa) photo-etch definition of a PMMA (Poly Methyl Meta Acrylate) structure, having a thickness of 500 nm that corresponds to the uncovered structure desired,
bb) deposition of the Si0₂ film of 200 nm thickness across the surface of said substrate including said PMMA structure,
cc) removal of the Si0₂ film from the waveguide structure by lifting the PMMA structure by immersion in a solvent;
- said deposition of the Si0₂ film is effected by magnetron sputtering in an oxidizing environment of argon and oxygen,
- said proton exchange is effected in a 1% diluted Benzoic Acid with Lithium Benzoate at a temperature of about 235°C and for a duration of about 35 minutes,
- said thermal treatment is effected at a temperature of about 350°C for about 50 minutes,
- applying metal electrodes to said Si0₂ film along opposite longitudinal sides of said waveguide structure.

## Patentansprüche

1. Verfahren zur Herstellung einer elektro-optischen Vorrichtung mit wenigstens einem optischen Einmoden-Wellenleiter, umfassend die folgenden Schritte:
a) Bereitstellen eines optischen Substrats aus LiNb0₃;
b) Maskierung der Oberfläche des Substrats mit einem Film aus Si0₂ zur Begrenzung einer nicht bedeckten Wellenleiterstruktur;
c) Durchführen eines Protonenaustauschs entlang der nicht bedeckten Struktur der Oberfläche, um die optischen Eigenschaften des Substrats entlang der nicht abgedeckten Struktur zu modifizieren;
d) Thermische Behandlung des Substrats in einer Sauerstoff-Atmosphäre zur Herbeiführung einer Interdiffusion von Protonen in einer Austauschschicht entlang der nicht bedeckten Struktur, wodurch in dem Substrat ein optischer Einmoden-Wellenleiter erzeugt wird,
dadurch gekennzeichnet,
- daß das optische Substrat ein in X-Richtung geschnittener Kristall ist;
- daß die Maske zur Begrenzung der Wellenleiterstruktur in den folgenden Schritten erzeugt wird:
aa) Definieren einer PMMA-Struktur (Polymethyl-Methacrylat) durch Fotoätzung mit einer Dicke von 500 nm, die der gewünschten, nicht abgedeckten Struktur entspricht,
bb) Aufbringen des Si0₂-Film von 200 nm Dicke auf der Oberfläche des Substrates einschließlich der PMMA-Struktur,
cc) Abnehmen des Si0₂-Films von der Wellenleiterstruktur durch Eintauchen in ein Lösungsmittel zum Abheben der PMMA-Struktur;
- daß das Aufbringen des Si0₂-Films durchgeführt wird durch Magnetronzerstäubung in einer aus Argon und Sauerstoff bestehenden Oxydationsatmosphäre,
- daß der Protonenaustausch in einer 1 %igen, in Lithium-Benzoat gelösten Benzoesäure bei einer Temperatur von etwa 235°C und einer Dauer von etwa 35 Minuten erfolgt,
- daß die thermische Behandlung bei einer Temperatur von etwa 350°C und einer Dauer von etwa 50 Minuten durchgeführt wird,
- daß auf gegenüberliegenden Längsseiten der Wellenleiterstruktur Metallelektroden an den Si0₂-Film angelegt werden.

## Revendications

1. Procédé de fabrication d'un dispositif électro-optique ayant au moins un guide d'ondes optiques à mode unique comprenant les étapes de :
a) prévoir un substrat optique de LiNbO3 ;
b) masquer la surface dudit substrat avec un film SiO₂ de façon à définir une structure de guide d'onde découverte ;
c) réaliser un échange de protons le long de la structure découverte de la surface pour modifier les propriétés optiques dudit substrat le long de ladite structure découverte ;
d) traiter thermiquement ledit substrat sous une atmosphère d'oxygène pour effectuer l'interdiffusion des protons dans une couche d'échange le long de ladite structure découverte, formant ainsi dans ledit substrat un guide d'onde optique à mode unique ;
caractérisé en ce que
- ledit substrat optique est un cristal à coupe 'x' ;
- le masque pour définir la structure de guide d'onde est réalisé selon les étapes suivantes :
aa) définition par photogravure d'une structure de PMMA (Poly Méthyle Métha Acrylate), ayant une épaisseur de 500 nm qui correspond à la structure découverte désirée,
bb) dépôt d'un film SiO₂ de 200 nm d'épaisseur sur la surface dudit substrat incluant ladite structure PMMA,
cc) enlèvement du film SiO₂ de la structure de guide d'onde par enlèvement de la structure PMMA par immersion dans un solvant ;
- ledit dépôt de film SiO₂ est effectué par pulvérisation par magnétron dans un environnement oxydant d'argon et d'oxygène,
- ledit échange de protons est effectué dans l'acide benzoïque dilué à 1 % avec du benzoate de lithium à une température d'environ 235°C et pendant une durée d'environ 35 minutes,
- ledit traitement thermique est effectué à une température d'environ 350° C pendant environ 50 minutes,
- application d'électrodes de métal audit film SiO₂ le long des côtés longitudinaux opposés de ladite structure de guide d'onde.
